# EUROPÄISCHE PATENTSCHRIFT

(11) **EP 0 418 588 B1**
(45) Veröffentlichungstag und Bekanntmachung des Hinweises auf die Patenterteilung: **18.12.1996**
(21) Anmeldenummer: 90116206.5
(22) Anmeldetag: 24.08.1990
(51) Int. Cl.: G01T 1/06

(54) **Auswerteverfahren für Glasdosimeter**
Analysis using glass dosimeters
Analyses utilisant un dosimètre de verre

(30) Priorität: 18.09.1989 JP 239869/89
(43) Veröffentlichungstag der Anmeldung: 27.03.1991
(73) Patentinhaber: Forschungszentrum Karlsruhe GmbH, 76133 Karlsruhe (DE); TOSHIBA GLASS CO., LTD., Haibara-gun Shizuoka-ken (JP)
(72) Erfinder: Burgkhardt, Bertram, D-7500 Karlsruhe 1 (DE); Ishidoya, Tatsuyo, Haibara-gun, Shizuoka-ken (JP)
(74) Vertreter: Gottlob, Peter, Dipl. Ing.

(56) Entgegenhaltungen:
- EP-A- 0 300 054
- DE-A- 3 110 943
- US-A- 3 412 248
- PATENT ABSTRACTS OF JAPAN vol. 9, no. 54 (P-340)(1777) 8. März 1985 & JP-A-59 190 681 ( TOSHIBA GLASS K.K ) 29 October 1984.
- PROCEEDINGS OF THE 5TH INTERNATIONAL CONFERENCE ON LUMINISCENCE DOSIMETRY, 17. Februar 1977, Sao Paulo, Brazil, Seiten 114-121; G. DÖRGER et al.: 'An automatic radiophotoluminescence device using the UV pulse technique.
- HEALTH PHYSICS, Bd. 18, Mai 1970, Pergamon Press, Northern Ireland, Seiten 573-575; J. BARTHE et al.: 'On the fluorescence decay of silver-activated glass dosimeters'

## Beschreibung

Die vorliegende Erfindung betrifft ein Verfahren zum Auswerten von Glasdosimetern nach dem Oberbegriff des Patentanspruchs 1 und ein Gerät zur Durchführung dieses Verfahrens nach dem Oberbegriff des Patentanspruchs 3.

Innerhalb der Strahlenschutzüberwachung müssen die Betreiber eines Kernreaktors, eines Beschleunigers, eines Röntgengenerators und einer Radioisotopenanlage die Strahlung sorgfältig überwachen, und beim Umgang mit diesen Geräten muß die Personendosis unbedingt gemessen werden. Deshalb ist es sehr wichtig, die Strahlendosis jedes Dosimeters getrennt zu messen und die Dosiswerte in angemessener Weise zu überwachen.

Bei Verwendung eines konventionellen Radiophotolumineszenzdosimeters wird ein Glaselementhalter 2 mit eingelegtem Fluoreszenzglaselement 1 in das untere Gehäuseteil 3 eingesetzt - angezeigt durch Pfeil A in Abbildung 8 - und das untere Gehäuseteil 3 wird dann in ein oberes Gehäuseteil 4 eingesetzt - angezeigt durch Pfeil B. Das Fluoreszenzglaselement 1 wird im sogenannten gekapselten Zustand an einen geeigneten Ort transportiert oder dort installiert. Bei der Messung der Strahlendosis des Fluoreszenzglaselements 1 wird der Glashalter 2 aus dem oberen und unteren Gehäuseteil 4 und 3 herausgenommen und in eine vorher festqelegte Meßposition gebracht. Daraufhin wird die Strahlendosis des strahlenexponierten Fluoreszenzglaselements 1 gemessen.

Wie aus Abb. 9 ersichtlich, wird bei Transmission des anregenden UV-Lichts 5 in das strahlenexponierte Fluoreszenzglaselement 1 das der Strahlendosis entsprechende rot/orangefarbene Radiophotolumineszenzlicht 6 (im folgenden RPL genannt) von einer Fluoreszenzlichtmeßfläche in eine andere Richtung als das in das Fluoreszenzglaselement gelenkte UV-Licht emittiert. Die Strahlendosis des Fluoreszenzglaselements 1 wird durch Auswertung des RPL gemessen.

Das auf der Fluoreszenzlichtmeßfläche des Fluoreszenzglaselements 1 nach Transmission des anregenden UV-Lichts 5 in dieser Fläche erzeugte Fluoreszenzlicht 6 besteht aus einer strahleninduzierten Fluoreszenzlichtkomponente und einer Fluoreszenzlichtkomponente (Vordosiskomponente) als einem schon vor der Einwirkung der Strahlen vorhandenen ursprünglichen Bestandteil des Fluoreszenzglaselements 1. Um das echte strahleninduzierte RPL zu erhalten, muß daher der Betrag der Vordosiskomponente vom Gesamtbetrag des im Fluoreszenzglaselement 1 erzeugten Fluoreszenzlichts subtrahiert werden.

In Anbetracht der Tatsache, daß die Abklingzeitkonstanten des RPL große Unterschiede aufweisen, haben die Erfinder der vorliegenden Erfindung ein Verfahren und ein ausschließlich zur zweckdienlichen Messung des RPL vorgesehenes Gerät vorgeschlagen (beschrieben in der noch nicht geprüften japanischen Patentanmeldung, Veröffentlichung Nr. Sho 59-190681) und im Anschluß daran ein Verfahren und ein Gerät zur Messung des RPL durch Verzögern des Einschaltzeitpunkts der Dynodenspannung eines Multipliers und Unterdrückung der Nachweisempfindlichkeit für die rascher abklingende Vordosis (beschrieben in der noch nicht geprüften japanischen Patentanmeldung, Veröffentlichung Nr. Sho 61-292582).

Nach zahlreichen Untersuchungen zur Messung der Strahlenexposition wurde auf folgende Probleme hingewiesen:

(1) Ein Problem betrifft die Vordosis. Das Abklingen der einen Komponente der Vordosis geschieht langsamer als die der anderen Vordosiskomponente. Selbst wenn die Nachweisempfindlichkeit der rascher abgeklungenen Vordosiskomponente unterdrückt wird, bleibt die Wirkung der langsamer abgeklungenen Vordosiskomponente bestehen, da diese langsamere Vordosiskomponente um einiges größer ist als das von einer niedrigen Strahlendosis ausgehende RPL. Mit anderen Worten, es ist sehr schwierig, das RPL mit hoher Empfindlichkeit und hoher Genauigkeit dadurch nachzuweise, daß die Nachweisempfindlichkeit der schneller abgeklungenen Vordosis, die Teil des in dem durch das UV-Licht angeregten Fluoreszenzglaselements 1 erzeugten Fluoreszenzlichts 6 ist, unterdrückt und die langsamer abgeklungene Vordosis subtrahiert wird.

(2) Ein weiteres Problem betrifft die Intensitätsverteilung des Fluoreszenzlichts. Nach der konventionellen Methode wird das von einer Stickstoffgaslasereinheit erzeugte anregende UV-Licht in ein Fluoreszenzglaselement 1 gelenkt, auch wenn die Abweichung der Intensitäten des anregenden UV-Lichts die Intensitäten des im Fluoreszenzglaselement erzeugten Fluoreszenzlichts verändert. Ein Teil des anregenden UV-Lichts wird in ein Referenzfluoreszenzglaselement gelenkt. Sobald die Abweichungen der Intensität des in dem strahlenexponierten Fluoreszenzglaselement 1 und Referenzglasfluoreszenzglaselement erzeugten Fluoreszenzlichts vorliegen, wird die Intensität des UV-Lichts aufgrund der Intensitätsabweichung korrigiert.

Wenn das anregende UV-Licht aufgeteilt und ein Teil davon in das Referenzfluoreszenzglaselement gelenkt wird, verändern sich allerdings die Verhältnisse zwischen Intensität des in das strahlenexponierte Fluoreszenzglaselement gelenkten UV-Lichts und Intensität des Referenzfluoreszenzglaselements, weil die Intensitäten in einer zu der Richtung des anregenden UV-Lichts senkrecht verlaufenden Ebene je nach Abstand von der Stickstoffgaslasereinheit anders verteilt sind. Dadurch ist es auch schwierig, die Intensität des Fluoreszenzlichts mit hoher Genauigkeit zu messen.

(3) Ein weiteres Problem liegt in der Korrektion der Abklingzeitkonstanten der Vordosiskomponente. Da die langsamer abgeklungene Vordosiskomponente mit Verzögerung in der Abtastzeit nachgewiesen wird, ergibt sich ein Abklingen der Intensität dieser Vordosis gemäß der Abklingzeitkonstanten. Zur Vervollständigung des Abklingvorgangs muß die abgelesene Fluoreszenzintensität mit einem Korrektionsfaktor multipliziert und dann die Strahlendosis des Fluoreszenzglaselements ermittelt werden. Da jedoch jedes Fluoreszenzglaselement eine andere Abklingzeitkonstante besitzen kann, müssen bei der Überwachung der Strahlendosis die Korrektionsfaktoren der Fluoreszenzglaselemente gewissenhaft berücksichtigt werden.

Die Korrektionsfaktoren jedes Fluoreszenzglaselements sollten nach Möglichkeit getrennt geprüft werden. Einstellen und Eingabe der Korrektionsfaktoren von Hand für jedes Fluoreszenzglaselement sind jedoch sehr kompliziert, und zum Zeitpunkt der kontinuierlichen Messung müssen die den jeweiligen Fluoreszenzglaselementen entsprechenden Korrektionsfaktoren getrennt ausgewählt werden. Um diesen komplizierten Vorgang zu umgehen, wird als Korrektionsfaktor eine repräsentative Konstante gewählt, was die Meßgenauigkeit verringert. Dies gilt auch für die Korrektion der Empfindlichkeit der Fluoreszenzglaselemente.

In Anbetracht der obigen Situation wurde die vorliegende Erfindung gemacht, die ein Verfahren und Gerät zur Messung der Strahlendosis des Fluoreszenzglaselements mit hoher Empfindlichkeit und Genauigkeit dadurch bereitstellt, daß kleinere Beträge der Vordosiskomponenten eines Fluoreszenzglaselements herausgegriffen werden.

Ein weiteres Ziel der vorliegenden Erfindung besteht in der Bereitstellung eines Geräts zur Messung der Strahlendosis über den sehr genauen Nachweis der Fluoreszenzintensität eines Fluoreszenzglaselements unbeeinflußt von der Abweichung der Intensitätsverteilung des anregenden UV-Lichts.

Ein weiteres Ziel der vorliegenden Erfindung besteht in der Bereitstellung eines Geräts, in dem die Korrektionsfaktoren einzelner Fluoreszenzglaselemente geeignet kontrolliert werden, die Strahlendosis jedes Fluoeszenzglaselements ermittelt und die Zuverlässigkeit der Strahlenüberwachung erhöht wird.

Die vorgenannten Probleme werden durch die Merkmale der Patentansprüche 1 und 3 gelöst.

Die Unteransprüche beschreiben vorteilhafte Ausgestaltungen der Erfindung.

Von Vorteil ist ein Wellenlängenselektierteil welches zwischen einem photoelektrischen Detektor und einem Fluoreszenzglaselement in der Weise angebracht ist, daß es zur Glasdosimeterauswerteeinheit gehört und damit eine Fluoreszenzlichtkomponente in einem spezifischen Wellenlängenbereich selektiv ausgefiltert werden kann.

Eine Optik zur Transmission eines Teils des anregenden UV-Lichts in das strahlenexponierte Fluoreszenzglaselement und eines weiteren Teils des anregenden UV-Lichts in ein referenzfluoreszenzglaselement ist so aufgebaut, daß die Verteilung der Intensitäten des anregenden UV-Lichts, das in beide Fluoreszenzglaselemente gelenkt wird, gleich ist. In einem Ausführungsbeispiel werden das strahlenexponierte Fluoreszenzglaselement und das Referenzglaselement so angeordnet, daß sie von einer Stickstoffgaslasereinheit mit der gleichen optischen Weglänge getrennt sind.

Erfindungsgemäß wird darüber hinaus ein Gerät bereitgestellt, das eine Auswertevorrichtung für den Erkennungscode umfaßt, mit welcher der an einem ein Fluoreszenzglaselement haltenden Glaselementhalter befestigte Erkennungscode abgelesen werden kann, und/oder ein den Glaselementhalter aufnehmendes Dosimeter, einen Datenspeicher zum Speichern von Korrektionsfaktoren für die Fluoreszenzabklingcharakteristika und/oder für die je nach Fluoreszenzglaselement sich unterscheidenden Empfindlichkeiten sowie Betriebs- und Datenverarbeitungssystem für die Ausgabe der entsprechenden Korrektionsfaktoren aus dem Datenspeicher aufgrund der vom Erkennungscodelesegerät abgelesenen Erkennungscodes sowie für die Berechnung der Strahlendosis jedes Fluoreszenzglaselements.

Die Dosismessung wird dann durchgeführt, wenn die Auswirkung der Vordosiskomponente mit der langsameren Abklingcharakteristik deutlich unterdrückt wird, einmal durch Verringerung der Wirkung der vor Strahleneinwirkung vorhandenen, durch das Fluoreszenzglaselement selbst bedingten und aus dem Fluoreszenzlicht stammenden Vordosis und zum anderen durch Wahl einer Fluoreszenzlichtkomponente in einem spezifischen Wellenlängenbereich, in dem das der Strahlendosis entsprechende RPL am deutlichsten sichtbar wird. Da das Verhältnis von Vordosis zu RPL klein ist, ist der subtrahierte Betrag der Vordosis ebenfalls klein, so daß in diesem Arbeitsgang eine bessere Auflösung erreicht wird. Folglich wird die Strahlendosis des strahlenexponierten Fluoreszenzglaselements mit hoher Genauigkeit gemessen.

Desweiteren wird durch das Anbringen eines Wellenlängenselektierteils zum Ausfiltern des Fluoreszenzlichtelements in einem spezifischen Wellenlängenbereich zwischen Fluoreszenzglaselement und einem photoelektrischen Detektor der Aufbau des Auswertegeräts sehr einfach. Da darüber hinaus die durch das Fluoreszenzglaselement selbst bedingte Vordosis vor der Strahleneinwirkung niedrig ist, kann die Lichtkomponente, welche das der Strahlendosis entsprechende RPL am deutlichsten ausweist, gewählt werden, und die Vordosis im spezifischen Wellenlängenbereich wird unterdrückt, während sich die Empfindlichkeit des photoelektrischen Detektors erhöht. Daher kann ein sehr schwaches RPL mit hoher Empfindlichkeit nachgewiesen werden.

Das im Stickstoffgaslaser erzeugte anregende UV-Licht trifft auf das strahlenexponierte Fluoreszenzglaselement und das Referenzfluoreszenzglaselement mit gleicher Intensitätsverteilung auf. Wenn also Unterschiede in der Intensität oder Intensitätsverteilung des anregenden Fluoreszenzlichts auftreten, wird das Licht im gleichen Verhältnis in beide Fluoreszenzglaselemente gelenkt. Deshalb wird das Verhältnis des von den Fluoreszenzglaselementen ausgehenden Fluoreszenzlichts konstant, und die Abweichungen der Intensität und der Intensitätsverteilung des anregenden UV-Lichts werden korrigiert.

Die Erkennungscodes, die Korrektionsfaktoren der Fluoreszenzabklingcharakteristika und die Korrektionsfaktoren der Empfindlichkeitscharakteristika für die jeweiligen Fluoreszenzglaselementewerden zuvor im Datenspeicher gespeichert, und dann wird die Fluoreszenz unter Zuhilfenahme des am Glaselementhalter oder am Dosimeter angebrachten Erkennungscodes korrigiert, wobei die Strahlendosis jedes Fluoreszenzglaselements gemessen wird.

Es folgt eine Kurzbeschreibung der Figuren:

Fig. 1 ist ein Blockdiagramm, das ein Auswerteverfahren für Glasdosimeter gemäß vorliegender Erfindung beschreibt.

Fig. 2 ist eine charakteristische Darstellung von Wellenlängen einerseits und Vordosis sowie RPL andererseits der Anordnung in Fig. 1.

Fig. 3 verdeutlicht die Beziehungen zwischen Abweichung der Intensität und Intensitätsverteilung der Laserstrahlen einerseits und den Abständen von der Stickstoffgaslasereinheit andererseits.

Fig. 4 ist ein Blockdiagramm, das ein Gerät gemäß vorliegender Erfindung zeigt.

Fig. 5 zeigt die Anordnung einer Optik für den Einsatz in dem in Fig. 4 gezeigten Gerät.

Fig. 6 ist eine perspektivische Darstellung eines Glaselementhalters mit Fluoreszenzglaselement und Erkennungscode.

Fig. 7 ist ein Blockdiagramm, auf dem die Korrektionsfaktoren jedes Fluoreszenzglaselements kontrolliert werden und die gemessene Strahlendosis korrigiert wird.

Fig. 8 und 9 zeigen ein konventionelles Verfahren und ein konventionelles Gerät; Fig. 8 ist eine perspektivische Darstellung des Fluoreszenzglasdosimeters in auseinandergezogener Anordnung, und Fig. 9 zeigt den Zustand, in dem das anregende UV-Licht in das in Fig. 6 gezeigte Fluoreszenzglaselement gelenkt wird, sowie das dabei entstehende Fluoreszenzlicht.

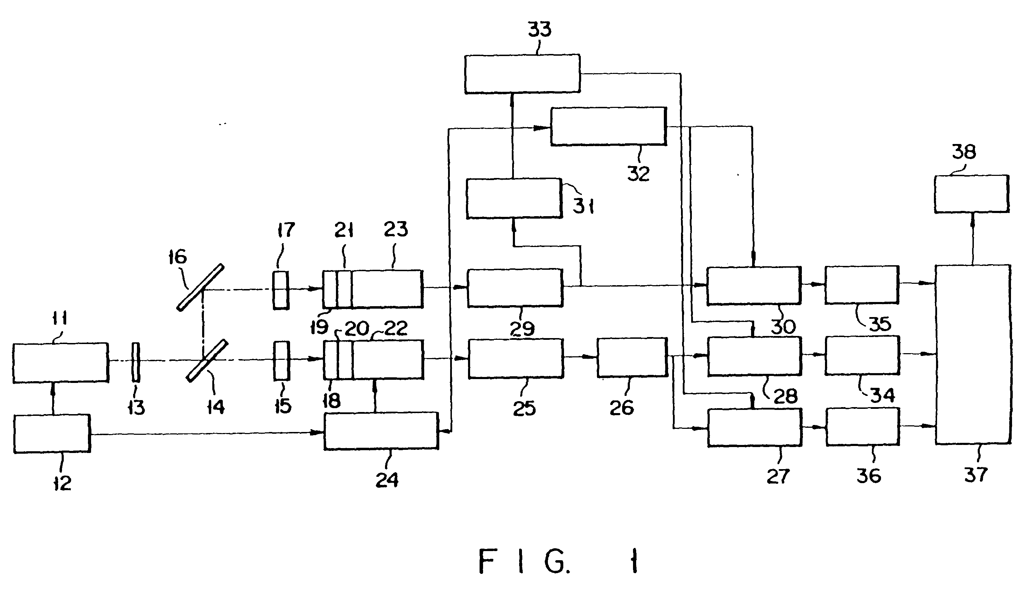

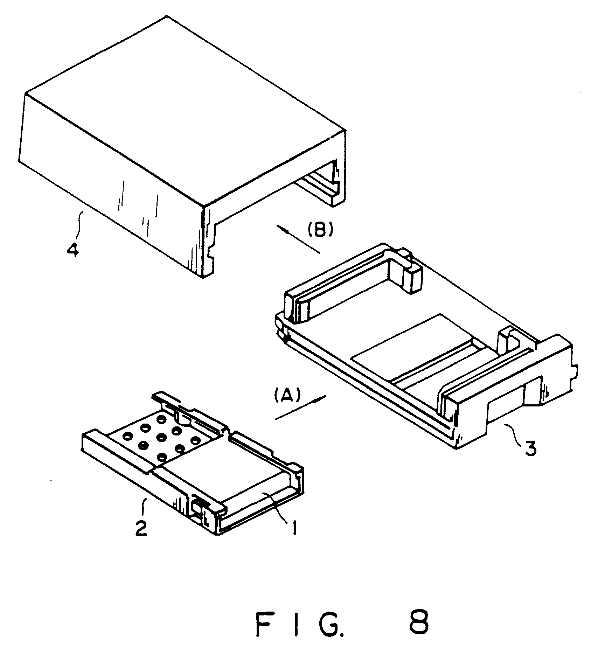

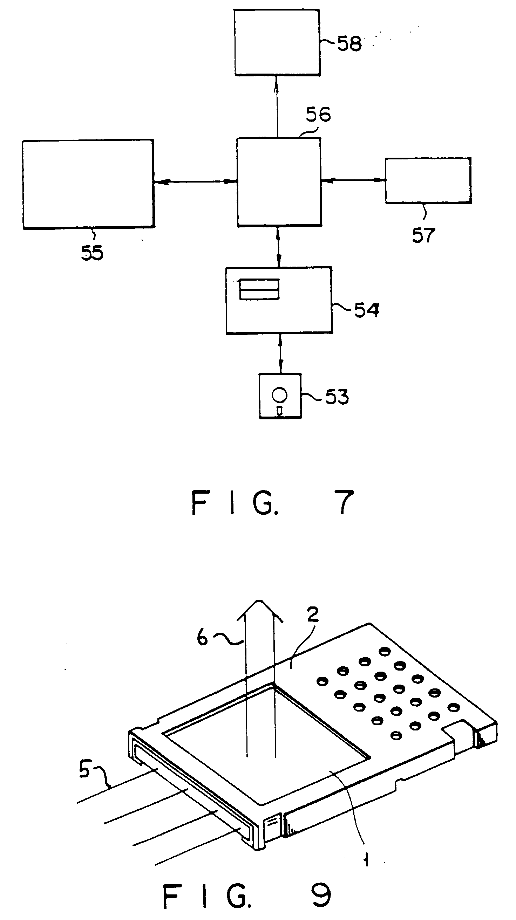

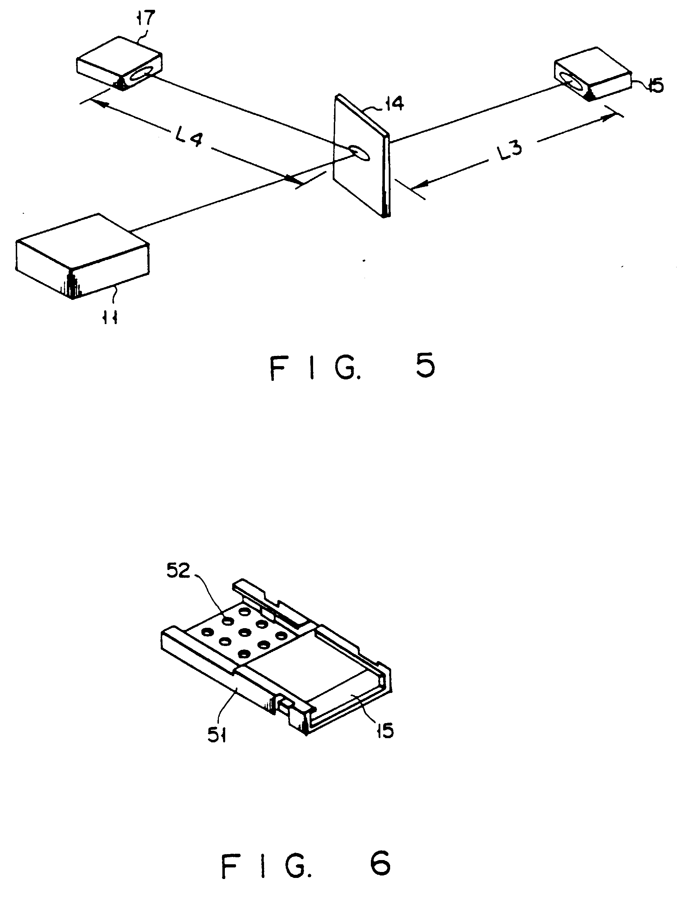

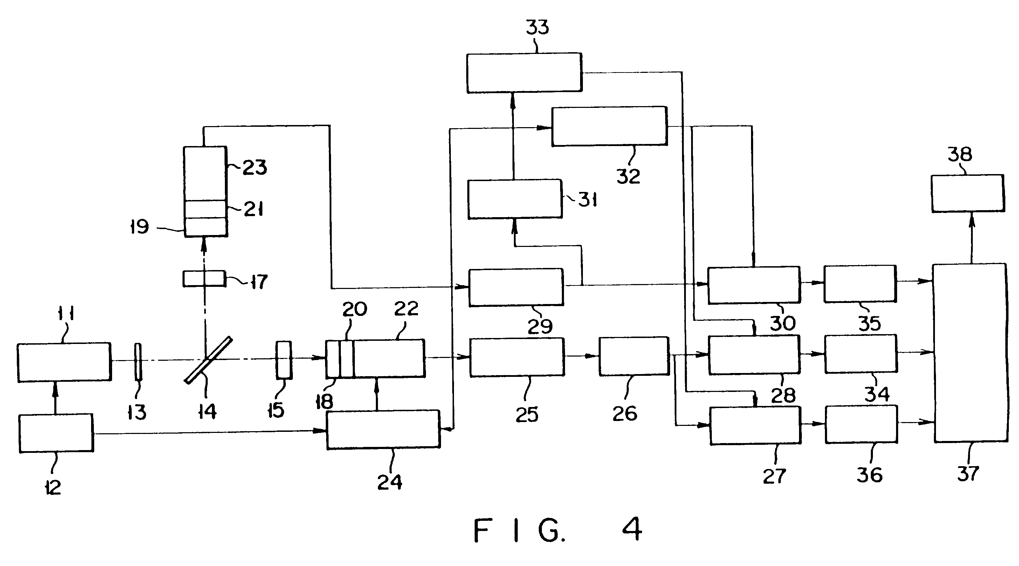

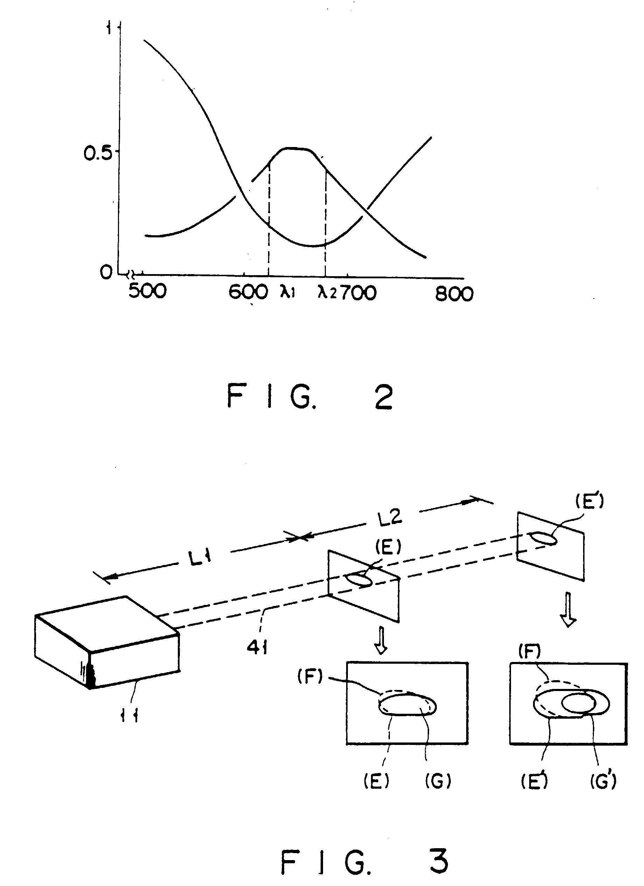

Ein Ausführungsbeispiel des Verfahrens und des Geräts zum Auswerten von Glasdosimetern gemäß Anspruch 1 und 3 der vorliegenden Erfindung wird nun unter Bezugnahme auf Fig. 1 und 2 erläutert. In Fig. 1 wird eine Stickstoffgaslasereinheit 11 mit einer durch eine Impulsgeberschaltung 12 angelegten Momentanhochspannung gestartet und erzeugt UV-Licht mit 5 - 10 ns Impulsbreite und 337,1 nm Wellenlänge. Nachdem das UV-Licht ein Farbfilter 13 passiert hat, wird das Streulicht eliminiert, und nur die ultravioletten Strahlen der Wellenlänge 337,1 nm werden ausgewählt. Dann wird das UV-Licht auf einen halbdurchlässigen Spiegel 14 aus Quarzgutglas oder dergleichen geschickt und dort in zwei Teile aufgeteilt. Ein Teil des geteilten UV-Lichts geht direkt durch den halbdurchlässigen Spiegel 14 und wird in ein strahlenexponiertes Fluoreszenzglaselement 15 gelenkt. Der andere Teil des geteilten UV-Lichts wird vom halbdurchlässigen Spiegel 14 und dann ein zweites Mal von einem reflektierenden Spiegel 16 auf der nächsten Stufe reflektiert. Dann wird er in ein Referenzfluoreszenzglaselement 17 gelenkt. Das Referenzfluoreszenzglaselement 17 besteht beispielsweise aus vorbestrahltem silberaktiviertem Phosphatglas. Das Referenzfluoreszenzglaselement 17 wird zur Korrektion der Ausgangsschwankung des Stickstoffgaslasers benutzt. Da das durch UV-Anregung erzeugte RPL von der Intensität des angeregten UV-Lichts abhängt, d.h. von der Intensität des Lasers, wird der gemessene RPL-Wert unter Bezugnahme auf das vom Referenzfluoreszenzglaselement 17 ausgehende Fluoreszenzlicht korrigiert, was später beschrieben wird.

Bei der Transmission des anregenden UV-Lichts wird das der Strahlendosis entsprechende Fluoreszenzlicht an der Nachweisseite des Fluoreszenzglaselements 15 erzeugt; an der Nachweisseite des Referenzfluoreszenzglaselements 17 wird Referenzfluoreszenzlicht erzeugt. Nachdem die beiden Arten von Fluoreszenzlicht die entsprechenden Sperrfilter 18 und 19 für UV-Licht durchlaufen haben, wird dieses Licht über Wellenlängenselektierteile 20 und 21, beispielsweise Interferenzfilter, an die Photomultiplier 22 und 23 geschickt. Eine Schaltung zur Erzeugung von Hochspannung 24 erhält von der Impulsgeberschaltung 12 ein Startsignal, welches gleichzeitig mit dem von der Stickstoffgaslasereinheit 11 ausgesandten Signal ausgesandt wird, oder empfängt von einem später beschriebenen Schmidt-Trigger ein Ausgangssignal. Dann wird die Nachweisempfindlichkeit geregelt. Die Empfindlichkeit wird dadurch geregelt, daß die Nachweisempfindlichkeit der Dynodenspannung der Photomultiplier 22 dann angehoben wird, wenn die schnelle abgeklungene Vordosis des strahlenexponierten Fluoreszenzlichts genügend abgeklungen ist und dadurch die Nachweisempfindlichkeit der Photomultiplier 22 erhöht wird.

Die UV-Sperrfilter 18 und 19 haben die Aufgabe, den Eingang des anregenden UV-Lichts in die Photomultiplier 22 und 23 zu verhindern, und die Wellenlängenselektierteile 20 und 21 haben die Aufgabe, nur die Strahlen der Fluoreszenzlichtkomponente im spezifischen Wellenlängenbereich durchzulassen.

Das vom Photomultiplier 22 nachgewiesene strahlenexponierte Fluoreszenzlicht wird von einem Linearverstärker 26 über einen Vorverstärker 25 linear verarbeitet und an das erste und zweite Abtastgatter 27 und 28 geschickt. Das mit dem Photomultiplier 23 nachgewiesene Referenzfluoreszenzlicht wird mit einem Vorverstärker in vorher festgelegter Höhe verstärkt und an ein drittes Abtastgatter 30 geschickt.

Ein Schmidt-Trigger 31 schickt zu einem vorher festgelegten Zeitpunkt nach Nachweis des Referenzfluoreszenzlichts Lichtsignale mit vorher festgelegter Amplitude und dergleichen zur Hochspannungsgeneratorschaltung 24 und die Abtasteinstellschaltungen 32 und 33. Die Schaltungen 32 und 33 stellen einen ersten bzw. zweiten Zeitpunkt für das Abtasten ein. Mit der Abtasteinstellungsschaltung 32 wird eine erste Abtastzeit festgelegt, bei der die Gatter der zweiten und dritten Abtastgatterschaltung 28 und 30 geöffnet werden, nachdem die Vordosis, die durch UV-Anregung entsteht und eine hohe Fluoreszenzintensität besitzt, nach Eingang des Referenzfluoreszenzlichts in den Schmidt-Trigger 31 voll abgeklungen ist. Während der ersten Abtastperiode werden das strahlenexponierte Fluoreszenzlicht und das Referenzfluoreszenzlicht abgetastet und an die nachfolgenden Integratoren 34 und 35 geschickt. Andererseits stellt die Abtasteinstellschaltung 33 eine zweite Abtastzeit ein, in der nur die Vordosis mit langsamer Abklingcharakteristik abgetastet wird, sobald die Fluoreszenzkomponente voll abgeklungen ist. In der zweiten Abtastperiode öffnet sich das Gatter der ersten Abtastgatterschaltung 27. Die Vordosis mit der langsamen Abklingcharakteristik wird abgetastet und an den folgenden Integrator 36 gemeldet. Die abgetasteteten Werte werden als gemittelter Gleichstrom von den Integratoren 34 bis 36 integriert und an das Betriebs- und Datenverarbeitungssystem 37 geschickt.

Das Betriebs- und Datenverarbeitungssystem 37 subtrahiert den mit Integrator 36 ermittelten integrierten Wert von dem mit Integrator 34 ermittelten Wert, wodurch das in dem während der ersten Abtastperiode nachgewiesenen Fluoreszenzlicht enthaltene RPL nachgewiesen wird. Mit der Einrichtung 37 wird das Verhältnis der RPL-Komponente zu dem mit Integrator 35 ermittelten integrierten Wert berechnet, und die auf die Abweichung in der Intensität des UV-Lichts zurückzuführende Abweichung der RPL-Komponente wird korrigiert. Schließlich wird mit Einrichtung 37 die korrigierte RPL-Komponente als Strahlendosis des Fluoreszenzglaselements 15 bestimmt, und dieser Wert wird auf einem Bildschirm 38 angezeigt.

Da in diesem Ausführungsbeispiel die Fluoreszenzlichtkomponente in einem bestimmten Wellenlängenbereich von λ₁ bis λ₂ aus der Gesamtfluoreszenz ausgewählt wird, d.h. in dem Wellenlängenbereich, in dem, wie Fig. 2 zeigt, die Fluoreszenzintensität von RPL groß und die Fluoreszenzintensität der Vordosis gering ist, wird die Vordosiskomponente mit der langsamen Abklingcharakteristik auf 1/2 bis 1/5 der mit dem konventionellen Verfahren und dem konventionellen Gerät bestimmten Vordosis verringert. Durch Verringerung der Vordosis erhöht sich die Empfindlichkeit des Photomultipliers, und bei hoher Empfindlichkeit wird ein schwaches RPL nachgewiesen. Außerdem verändert sich beim Einsatz der konventionellen Methode und des konventionellen Geräts die gemessene Vordosis mit der Charakteristik des Photomultipliers. Erfindungsgemäß wird dagegen mit dem Fluoreszenzfilter in einem spezifischen Wellenlängenbereich die Abhängigkeit der Spektralcharakteristika der Photomultiplier aufgehoben, wobei die Charakteristika der Photomultiplier unbeachtet bleiben sollten. Weiterhin wird durch Verringerung des Verhältnisses der Vordosis zum RPL der subtrahierte Dosiswert klein, so daß die Auflösung beim Einsatz größer wird und damit die Messung mit höherer Genauigkeit durchgeführt werden kann.

Im obigen Ausführungsbeispiel wird ein Interferenzfilter als Wellenlängenselektierteil benutzt. Das Interferenzfilter kann jedoch mit einem Farbglasfilter kombiniert oder es kann ein Prisma oder ein optisches Gitter verwendet werden. Darüber hinaus können erfindungsgemäß verschiedene Änderungen an der Lichtquelle für das anregende UV-Licht, die Fluoreszenzlichtdetektoren und dergleichen vorgenommen werden.

Ein Ausführungsbeispiel, das die Ansprüche 3 und 4 der vorliegenden Erfindung betrifft, wird unter Bezugnahme auf Fig. 3 bis 5 erläutert. In diesen Abbildungen werden die gleichen Elemente wie in Fig. 1 mit den gleichen Bezugsnummern bezeichnet, und auf eine ausführliche Erläuterung kann verzichtet werden. Dieses Ausführungsbeispiel eines Geräts zum Auswerten von Glasdosimetern ist, mit Ausnahme der Optik, im Aufbau vergleichbar dem in Fig. 1 gezeigten. Die Optik wird ausführlich erläutert.

In der Regel wird das von der Stickstoffgaslasereinheit 11 erzeugte UV-Licht in das Fluoreszenzglaselement 15 und das Referenzfluoreszenzglaselement 17 über Farbfilter 13, den halbdurchlässigen Spiegel 14 und den reflektierenden Spiegel 16 gelenkt, was aus Fig. 1 hervorgeht. Die Verteilung der Intensität auf einer senkrecht zum Laserstrahl verlaufenden Ebene ist aus Fig. 3 ersichtlich. Die senkrecht zur oben genannten Ebene vom Ausgang der Stickstoffgaslasereinheit 11 emittierten ultravioletten Laserstrahlen 41 bilden eine kreisförmige Fläche E, angezeigt durch eine durchgezogene Linie, mit einer Abweichung F, angezeigt durch eine gestrichelte Linie und im Abstand L1 von der Stickstoffgaslasereinheit 11 leicht nach links abgelenkt. Der Bereich mit der deutlich starken Intensität ist in G gestrichelt wiedergegeben. Im Abstand L1 + L2 von der Stickstoffgaslasereinheit 11 bilden die ultravioletten Laserstrahlen 41 eine größere kreisförmige Fläche E′. Die Abweichung F′ und der Bereich G′ mit der deutlich starken Intensität sind ebenfalls vergrößert dargestellt. Das bedeutet, daß sich die Intensitätsverteilung im ultravioletten Strahl je nach Abstand vom Ausgang der Stickstoffgaslasereinheit 11 verändert. Da dies zur Intensitätsabweichung des UV-Lichts führt, kann die Strahlendosis des strahlenexponierten Fluoreszenzglaselements nicht mit hoher Genauigkeit gemessen werden, ohne daß eine entsprechende Korrektion der Intensitätsverteilung vorgenommen wird.

Im zweiten Ausführungsbeispiel des auf der vorliegenden Erfindung beruhenden Geräts fehlt, wie aus Fig. 4 und 5 ersichtlich, der reflektierende Spiegel 16 aus Fig. 1, und ein strahlenexponiertes Fluoreszenzglaselement 15 sowie ein Referenzfluoreszenzglaselement 17 sind von einem halbdurchlässigen Spiegel 14 im gleichen Abstand L3 und L4 so angeordnet, daß beide Fluoreszenzglaselemente stets anregendes UV-Licht mit gleicher Intensitätsverteilung im Strahl aufnehmen. Durch diese Anordnung sind eine leichte und genaue Korrektion der Intensitätsabweichung des anregenden ultravioletten Lichts sowie die genaue Messung der Strahlendosis des ebenfalls strahlenexponierten Fluoreszenzglaselements 15 möglich. Dieses Gerät arbeitet ähnlich wie das Ausführungsbeispiel in Fig. 1, so daß auf eine Erläuterung hier verzichtet wird.

Selbst wenn sich Intensität und Intensitätsverteilung der das anregende UV-Licht erzeugenden Stickstoffgaslasereinheit 11 ändern, ist die Intensitätsverteilung des anregenden UV-Lichts, das in das strahlenexponierte Fluoreszenzglaselement 15 gelenkt wird, gleich der des Referenzfluoreszenzglaselements 17, und das Verhältnis des von der Fluoreszenznachweisfläche der Fluoreszenzglaselemente 15 und 17 transmittierten Fluoreszenzlichts ist konstant. Folglich können die Abweichungen bezüglich Intensität und Intensitätsverteilung des Lasers aus der Stickstoffgaslasereinheit 11 genau korrigiert werden, und die Messung kann mit hoher Genauigkeit ausgeführt werden.

Die vorliegende Erfindung ist nicht auf die oben genannten Ausführungsbeispiele beschränkt. Beispielsweise kann anstelle des halbdurchlässigen Spiegels 14 ein Lichtteiler verwendet werden oder das Licht kann in die Fluoreszenzglaselemente 15 und 17 gelenkt werden, die nach Teilung des Lichts durch den halbdurchlässigen Spiegel 14 vom halbdurchlässigen Spiegel 14 mit Hilfe von Glasfasern getrennt werden. Wenn die Lichtwege vom Spiegel 14 zu den Fluoreszenzglaselementen 15 und 17 nicht die gleiche Länge haben, kann das gestreute Licht mit Hilfe einer Linse oder dergleichen in der Weise zur Konvergenz gebracht werden, daß das auf die beiden Fluoreszenzglaselemente auftreffende Licht größenmäßig angeglichen wird. Darüber hinaus sind erfindungsgemäß zahlreiche Änderungen an der Lichtquelle für anregendes UV-Licht, am Fluoreszenzlichtdetektor und an anderen Teilen möglich.

Im folgenden wird ein Ausführungsbeispiel in Verbindung mit Anspruch 5 der vorliegenden Erfindung erläutert. Die technische Besonderheit dieses Ausführungsbeispiels liegt darin, daß der Korrektionsfaktor für die Fluoreszenzabklingcharakteristik und/oder die Empfindlichkeitscharakteristik für jedes Fluoreszenzglaselement automatisch gespeichert und überwacht wird.

Wie aus Fig. 6 ersichtlich, nimmt eine Hälfte eines Glaselementhalters 51 ein Fluoreszenzglaselement 15 auf. In der anderen Hälfte des Halters 51 befinden sich Indexöffnungen 52, die den Bereich des Erkennungscodes zum Erkennen des Glaselementhalters 51 bilden. Da das Fluoreszenzglaselement 15 nur selten aus dem Glaselementhalter 51 herausgenommen wird, werden die Indexöffnungen 52 zur Kennzeichnung des Glaselementhalters 51 benutzt und Beschäftigte in Kernenergieanlagen, die ein Fluoreszenzdosimeter und Fluoreszenzglaselement 15 bei sich tragen, können auch das Fluoreszenzglas 15 kennzeichnen.

Bei diesem Ausführungsbeispiel werden die Korrektionsfaktoren mit einer in Fig. 7 gezeigten Vorrichtung verarbeitet. Zuerst werden der Korrektionsfaktor der Fluoreszenzabklingcharakteristik und der Korrektionsfaktor der Empfindlichkeitscharakteristik jedes Fluoreszenzglaselements 15 im Datenspeicher, beispielsweise auf Diskette 53, gespeichert, so daß im Datenspeicher der Indexöffnungen 52 ein definierter Erkennungscode zugeordnet wird. Während der Messung der Strahlendosis der Fluoreszenzglaselemente 15 wird die Diskette 53 in eine Disketteneinheit 54 eingelegt. Die Bezugsnummer 55 zeigt die Leseeinrichtung für das Ablesen der Daten von den Indexöffnungen 52 des Glaselementhalters 51, einen Generator für anregendes UV-Licht zum Auswerten des vom Fluoreszenzglaselement 15 erzeugten Fluoreszenzlichts, die Optik, den Photomultiplier und dergleichen. Die Bezugsnummer 56 zeigt das Betriebs- und Datenverarbeitungssystem zur genauen Berechnung der Strahlendosis jedes Fluoreszenzglaselements 15 entsprechend dem Erkennungscode und dem Betrag des Fluoreszenzlichts, beide mit den Leseeinrichtungen 55 ermittelt, sowie den auf Diskette 53 in Disketteneinheit 54 gespeicherten Korrektionsfaktor. Die Bezugsnummer 57 bezeichnet einen Drucker, die Bezugsnummer 58 einen Bildschirm usw. Der Korrektionsfaktor der Fluoreszenzabklingcharakteristik ergibt sich schon vorher durch Verarbeitung jedes noch nicht strahlenexponierten ausgeheizten Fluoreszenzglaselements auf dem in Fig. 7 gezeigten Gerät. Er wird auf Diskette 53 gespeichert. Der Korrektionsfaktor der Empfindlichkeitscharakteristik jedes Fluoreszenzglaselements wird in gleicher Weise zuvor auf Diskette 53 gespeichert.

Bei diesem Ausführungsbeispiel wird mit der Messung der Strahlendosis einer Vielzahl strahlenexponierter Fluoreszenzglaselemente 15 begonnen, nachdem die Diskette 53 mit den Daten des Erkennungscodes, der Fluoreszenzabklingcharakteristik und der Empfindlichkeitscharakteristik in die Disketteneinheit 54 eingesetzt ist. Mit der Leseeinrichtung 55 werden der Erkennungscode von den Indexöffnungen 52 des Glaselementhalters 51 und daraufhin die von jedem strahlenexponierten Fluoreszenzglaselement 15 ausgehende Strahlendosis abgelesen. Mit dem Betriebs- und Datenverarbeitungssystem 56 wird der abgelesene Erkennungscode mit den auf Diskette 53 abgespeicherten Codes mit hoher Geschwindigkeit verglichen. Sobald der Code identifiziert ist, werden mit dem Betriebs- und Datenverarbeitungssystem 56 die Daten des Korrektionsfaktors der Fluoreszenzabklingcharakteristik und des Korrektionsfaktors der Empfindlichkeitscharakteristik des Fluoreszenzglaselements, dessen Code identifiziert ist, angezeigt. Die von der Leseeinrichtung 55 angezeigte Strahlendosis wird aufgrund der Korrektionsfaktoren korrigiert, und die korrigierte Strahlendosis wird auf dem Bildschirm 58 angezeigt oder vom Drucker 57 ausgedruckt.

Bei diesem Ausführungsbeispiel wird eine Diskette 53 benutzt. Es kann aber auch eine Festplatte oder ein anderer Speicher verwendet werden. Es ist überflüssig zu erwähnen, daß eine Reihe von Änderungen an den Bauteilen möglich ist.

Wie bereits erläutert, besitzt die vorliegende Erfindung die folgenden technischen Vorzüge:

Erstens wird aufgrund der vorliegenden Erfindung gemäß Anspruch 1 und 2 eine Fluoreszenzlichtkomponente in einem spezifischen Wellenlängenbereich aus dem Fluoreszenzlicht mittels Wellenlängenselektierteil oder dergleichen ausgewählt. Damit kann das RPL gemessen werden, wenn die Vordosis mit langsamer Abklingcharakteristik niedrig ist. Die Empfindlichkeit des photoelektrischen Detektors wird erhöht, damit schwaches RPL mit hoher Empfindlichkeit gemessen werden kann. Da das Verhältnis von Vordosis zu RPL-Komponente klein ist, ist auch der zu subtrahierende Betrag der Vordosis klein, und die Auflösung während des Einsatzes ist hoch. Die Messung kann also mit hoher Genauigkeit durchgeführt werden. Auch ändert sich der Betrag der Vordosis infolge des Unterschieds in den Charakteristika der spektralen Empfindlichkeit der photoelektrischen Detektoren. Verfahren und Gerät entsprechend der vorliegenden Erfindung werden jedoch durch die Charakteristik der photoelektrischen Detektoren nicht beeinflußt, so daß es nicht nötig ist, die Charakteristik der Detektoren auszuwählen, was die Wartungsfreundlichkeit des Geräts erhöht. Außerdem wird durch Einsatz des Wellenlängenselektierteils das Gerät einfach und kompakt und stellt ein sehr effektives Mittel der Strahlenüberwachung mit hoher Empfindlichkeit und hoher Genauigkeit dar.

Zweitens sind aufgrund der Erfindung gemäß Anspruch 3 und 4 die Intensitäten und die Intensitätsverteilungen des in das strahlenexponierte Fluoreszenzglaselement gelenkten UV-Lichts und des Referenzfluoreszenzelements gleich, und das Verhältnis des von beiden Fluoreszenzglaselementen ausgehenden Fluoreszenzlichts ist konstant. Deshalb werden die Abweichungen in der Intensität und Intensitätsverteilung in der richtigen Weise korrigiert.

Schließlich werden aufgrund der Erfindung gemäß Anspruch 5 der Erkennungscode und die Korrektionsfaktoren für jedes Fluoreszenzglaselement gespeichert, und die Strahlendosis wird aufgrund der Korrektionsfaktoren jedes Fluoreszenzglaselements, dessen Erkennungscode zum Zeitpunkt der Strahlendosis abgelesen wird, korrigiert. Deshalb erfolgt die Korrektion mit hoher Genauigkeit, und die Strahlendosis jedes Fluoreszenzglaselements wird mit hoher Genauigkeit gemessen. Bei dieser Anordnung ist eine manuelle Eingabe der Korrektionsfaktoren nicht erforderlich, und das kontinuierliche Auswerten der Strahlendosis der Fluoreszenzglaselemente wird leichter, was die Messung ganz erheblich vereinfacht.

### Liste der Bezugsnummern

- 11: Stickstoffgaslasereinheit
- 13: Farbfilter
- 14: halbdurchlässiger Spiegel
- 15: strahlenexponiertes Fluoeszenzglaselement
- 16: reflektierender Spiegel
- 17: Referenzfluoreszenzglaselement
- 18, 19: UV-Sperrfilter
- 20, 21: Wellenlängenselektierteil
- 22, 23: Photomultiplier
- 37: Betriebs- und Datenverarbeitungssystem
- 38: Bildschirm
- 51: Glaselementhalter
- 52: Indexöffnungen (Codelöcher)
- 53: Diskette
- 55: Ableseeinrichtung
- 56: Betriebs- und Datenverarbeitungssystem
- 57: Drucker
- 58: Bildschirm

## Patentansprüche

1. Verfahren zum Auswerten von Glasdosimetern, bei dem anregendes UV- Licht in ein Fluoreszenzglaselement gelenkt wird, dann das in dem Fluoreszenzglaselement erzeugte Fluoreszenzlicht in einer ersten und einer von dieser sich unterscheidenden zweiten Abtastzeit über eine vorher festgelegte Zeit abgetastet wird und die Strahlendosis aus dem Integral des abgetasteten Fluoreszenzlichts des Fluoreszenzglaselements berechnet wird, dadurch gekennzeichnet, daß eine Komponente des Fluoreszenzlichts in einem ganz bestimmten Wellenlängenbereich, in dem die Fluoreszenzintensität des Radiophotolumineszenzlichts groß und die Fluoreszenzintensität der Vordosis gering ist, ausgewählt und die Strahlendosis daraus berechnet wird.

2. Verfahren nach Anspruch 1, dadurch gekennzeichnet, daß die Glasdosimeter mit Erkennungscodes gekennzeichnet sind und mit Hilfe der Codierung Korrektionsfaktoren für die Fluoreszenzabklingcharakteristik und/oder die unterschiedliche Empfindlichkeit eines jeden Fluoreszenzglaselements (15) aus einem Datenspeicher ausgelesen werden und mit denen die Fluoreszenzintensität jedes Fluoreszenzglaselements (15) korrigiert und die Strahlendosis jedes Fluoreszenzglaselements (15) berechnet wird.

3. Gerät zur Durchführung des Verfahrens gemäß Anspruch 1 oder 2, bestehend aus einer Stickstoffgaslasereinheit (11) zur Erzeugung von anregendem UV- Licht, einer Optik zur Transmission des anregenden UV- Lichts in ein Fluoreszenzglaselement (15), einem photoelektrischen Detektor (22) zum Nachweis des Fluoreszenzlichts, welches durch das anregende UV-Licht angeregt wird und einem Betriebs- und Datenverarbeitungssystem zur Berechnung der Strahlendosis des Fluoreszenzglaselements (15) aus der vom photoelektrischen Detektor (22) nachgewiesenen Fluoreszenzintensität, dadurch gekennzeichnet, daß zwischen dem Fluoreszenzglaselement (15) und dem photoelektrischen Detektor (22) ein Wellenlängenselektierteil (20) angeordnet ist, mit dem Fluoreszenzlicht in einem ganz bestimmten Wellenlängenbereich, in dem die Fluoreszenzintensität des Radiophotolumineszenzlichts groß und die Fluoreszenzintensität der Vordosis gering ist, herausgefiltert werden kann.

4. Gerät nach Anspruch 3, gekennzeichnet durch einen Strahlteiler (14), ein Referenzfluoreszenzglaselement (17), einem zweiten Wellenlängenselektierteil (20) und einem zweiten photoelektrischen Detektor (23), wobei die Intensitätsverteilungen des in die Fluoreszenzglaselemente (15, 17) gelenkten UV-Lichts einander angeglichen sind.

5. Gerät nach Anspruch 4, dadurch gekennzeichnet, daß die optischen Weglängen zwischen der Stickstofflasereinheit (11) und den Fluoreszenzglaselementen (15, 17) gleich sind.

6. Gerät nach einem der Ansprüche 3 bis 5, gekennzeichnet durch eine Erkennungscode-Ableseeinrichtung (55) und einen Datenspeicher zum Speichern von Korrektionsfaktoren für die Fluoreszenzabklingcharakteristik und/oder die unterschiedliche Empfindlichkeit eines jeden Fluoreszenzglaselementes, mit denen die Fluoreszenzintensität jedes Fluoreszenzglaselements (15) korrigiert und die Strahlendosis jedes Fluoreszenzglaselements (15) berechenbar ist.

## Claims

1. Method of analysing glass dosimeters, wherein exciting UV light is directed into a fluorescent glass element, then the fluorescent light produced in the fluorescent glass element is scanned over a predetermined period in a first scanning period and in a second scanning period which differs from the first, and the radiation dose is calculated from the integral of the scanned fluorescent light of the fluorescent glass element, characterised in that one component of the fluorescent light is selected within a quite specific wavelength range, in which the fluorescence intensity of the radiophotoluminescent light is high and the fluorescence intensity of the preliminary dose is low, and the radiation dose is calculated therefrom.

2. Method according to claim 1, characterised in that the glass dosimeters are characterised by identification codes, and correction factors for the fluorescence die-away characteristic and/or the variable sensitivity of each fluorescent glass element (15) are read from a memory by means of the coding, and the fluorescence intensity of each fluorescent glass element (15) is corrected with said factors, and the radiation dose of each fluorescent glass element (15) is calculated.

3. Apparatus for accomplishing the method according to claim 1 or 2, comprising a nitrogen gas laser unit (11) for producing exciting UV light, an optical system for transmitting the exciting UV light to a fluorescent glass element (15), a photoelectric detector (22) for detecting the fluorescent light, which is excited by the exciting UV light, and an operational and data-processing system for calculating the radiation dose of the fluorescent glass element (15) from the fluorescence intensity detected by the photoelectric detector (22), characterised in that a wavelength selector (20) is disposed between the fluorescent glass element (15) and the photoelectric detector (22), by means of which selector fluorescent light can be filtered-out within a quite specific wavelength range, in which the fluorescence intensity of the radiophotoluminescent light is high and the fluorescence intensity of the preliminary dose is low.

4. Apparatus according to claim 3, characterised by a beam splitter (14), a reference fluorescent glass element (17), a second wavelength selector (20) and a second photoelectric detector (23), the intensity distributions of the UV light, which is directed into the fluorescent glass elements (15, 17), being adapted to one another.

5. Apparatus according to claim 4, characterised in that the optical path lengths between the nitrogen laser unit (11) and the fluorescent glass elements (15, 17) are identical.

6. Apparatus according to one of claims 3 to 5, characterised by an identification code reading device (55) and a memory for storing correction factors for the fluorescence die-away characteristic and/or the variable sensitivity of each fluorescent glass element, by means of which factors the fluorescence intensity of each fluorescent glass element (15) is corrected, and the radiation dose of each fluorescent glass element (15) can be calculated.

## Revendications

1. Procédé d'exploitation de dosimètres en verre, dans lequel de la lumière UV d'excitation est dirigée dans un élément de verre fluorescent, ensuite la lumière fluorescente produite dans l'élément de verre fluorescent est explorée dans un premier et un deuxième temps d'exploration se différenciant de celui-ci par un temps fixé auparavant et le débit de rayonnement est calculé à partir de l'intégrale de la lumière fluorescente explorée de l'élément de verre fluorescent, caractérisé en ce que un composant de la lumière fluorescente est choisi dans un domaine de longueurs d'ondes tout à fait déterminé, dans lequel l'intensité de la fluorescence de la lumière radiophotoluminescente est grande et l'intensité de fluorescence de la dose préliminaire est petite et le débit de rayonnement est calculé à partir de là.

2. Procédé selon la revendication 1, caractérisé en ce que les dosimètres en verre sont caractérisés par des codes d'identification et sont extraits par lecture d'une mémoire de données à l'aide du codage de facteurs de correction pour la caractéristique d'amortissement de la fluorescence et/ou la sensibilité variable d'un quelconque élément de verre fluorescent (15) et avec ceux-là l'intensité de fluorescence de chaque élément de verre fluorescent (15) est corrigée et le débit de rayonnement de chaque élément de verre fluorescent (15) est calculé.

3. Appareillage pour la réalisation du procédé selon les revendications 1 ou 2, se composant d'une unité laser d'azote gazeux (11) pour produire de la lumière UV, d'une optique pour la transmission de la lumière UV d'excitation dans un élément de verre fluorescent (15), d'un détecteur photoélectrique (22) pour détecter la lumière fluorescente, qui est excitée par la lumière UV d'excitation et d'un système de marche et de traitement de données pour le calcul du débit de rayonnement de l'élément de verre fluorescent (15) à partir de l'intensité de fluorescence détectée par le détecteur photoélectrique (22), caractérisé en ce que entre l'élément en verre fluorescent (15) et le détecteur photoélectrique (22) est disposée une partie sélective de longueurs d'ondes (20), avec laquelle la lumière fluorescente peut être extraite par filtration dans un domaine de longueurs d'ondes totalement déterminé, dans lequel l'intensité de la fluorescence de la lumière radiophotoluminescente est grande et l'intensité de la fluorescence de la dose préliminaire est faible.

4. Appareillage selon la revendication 3, caractérisé par un diviseur de rayonnement (14), un élément en verre fluorescent de référence (17), une deuxième partie sélective de longueur d'ondes (20) et un deuxième détecteur photoélectrique (23), les répartitions d'intensité de la lumière UV guidée dans les éléments de verre fluorescent (15, 17) étant assimilables l'une à l'autre.

5. Appareillage selon la revendication 4, caractérisé en ce que les longueurs d'ondes optiques entre l'unité laser à l'azote gazeux (11) et les éléments de verre fluorescent (15, 17) sont égales.

6. Appareillage selon une des revendications 3 à 5 caractérisé par un dispositif de lecture et de code d'identification (55) et une mémoire de données pour mémoriser des facteurs de correction pour la caractéristique d'amortissement de la fluorescence et/ou la sensibilité différente de chaque élément de verre fluorescent, avec lesquels l'intensité de la fluorescence de chaque élément de verre fluorescent est corrigée et le débit de rayonnement de chaque élément de verre fluorescent (15) peut être calculé.
